# EUROPÄISCHE PATENTANMELDUNG

(11) **EP 1 077 545 A2**
(43) Veröffentlichungstag der Anmeldung: **21.02.2001**
(21) Anmeldenummer: 00440203.8
(22) Anmeldetag: 05.07.2000
(51) Int. Cl.: H04B 10/18

(54) **Sender zum Erzeugen eines frequenzmodulierten optischen Digitalsignals**

(30) Priorität: 17.08.1999 DE 19938972
(71) Anmelder: ALCATEL, 75008 Paris (FR)
(72) Erfinder: Heidemann, Rolf, Dr., 71732 Tamm (DE)
(74) Vertreter: Urlichs, Stefan

(57) **Zusammenfassung**

Ein Sender zum Erzeugen eines frequenzmodulierten optischen Digitalsignals weist eine frequenzmodulierbare Lichtquelle und einen optischen Ausgang zum Anschluß eines externen Lichtwellenleiters auf, über den das Digitalsignal übertragbar ist. Zwischen Lichtquelle und optischem Ausgang ist ein optisches Element angeordnet, welches bei der Betriebswellenlänge der Lichtquelle eine chromatische Dispersion aufweist, die ausreicht, das frequenzmodulierte Digitalsignal in ein in detektierbarem Umfang amplitudenmoduliertes Digitalsignal umzuwandeln. Das optische Element kann ein aufgerolltes Lichtwellenleiterstück oder ein Bragg-Gitter sein. Das aufgerollte Wellenleiterstück hat vorzugsweise eine Länge von 3 bis 13 km. Dadurch kann der Sender für Inter-Rack-Kommunikation eingesetzt werden.

## Beschreibung

Die Erfindung betrifft einen Sender zum Erzeugen eines frequenzmodulierten optischen Digitalsignals nach dem Oberbegriff des Anspruchs 1.

Bei der optischen Nachrichtenübertragung werden Sender eingesetzt, die ein optisches Digitalsignal erzeugen. Das Digitalsignal wird dann in einen Lichtwellenleiter, z.B. eine Glasfaser, eingespeist und am anderen Ende des Lichtwellenleiters von einem Empfänger empfangen und in eine elektrisches Digitalsignal gewandelt. Meist werden Sender eingesetzt, die ein amplitudenmoduliertes optisches Digitalsignal erzeugen. Die chromatische Dispersion der verwendeten Lichtwellenleiter begrenzt in diesem Falle jedoch die maximal zulässige Länge des Lichtwellenleiters. Daher war es stets ein Bestreben, chromatische Dispersion auf der Übertragungsstrecke gering zu halten.

Aus EP 0 554 736 B1 ist ein Verfahren bekannt, bei dem der Sender ein frequenzmoduliertes Digitalsignal erzeugt und in den Lichtwellenleiter einspeist. Als Empfänger wird ein Detektor verwendet, der auf Amplitudenmodulation, nicht jedoch auf Frequenzmodulation anspricht. Ein solches Verfahren wird als DST-Verfahren bezeichnet (Dispersion Supported Transmission). Dieses Verfahren nutzt aus, daß durch die chromatische Dispersion des Lichtwellenleiters das frequenzmodulierte Digitalsignal in ein amplitudenmoduliertes Digitalsignal umgewandelt wird. Dadurch ist die maximal zulässige Länge des Lichtwellenleiters deutlich höher als bei der Übertragung amplitudenmodulierter Signale.

Dieses Verfahren weist jedoch den Nachteil auf, daß eine Amplitudenmodulation erst nach einer Mindestlänge des Lichtwellenleiters auftritt. Sollen kürzere Übertragungsstrecken überbrückt werden, so ist es notwendig entweder den Sender auf Amplitudenmodulation umzuschalten oder einen Empfänger zu verwenden, der Frequenzmodulation detektieren kann. In der EP 0 554 736 B1 wird auch erwähnt, daß eine Zusatz-Lichtwellenleiter-Länge verwendet werden kann, wenn die zur Überbrückung der Übertragungsstrecke notwendige Lichtwellenleiter-Länge nicht ausreicht, um die erforderliche Umwandlung zu bewirken. Dies würde aber in jedem Einzelfall ein aufwendiges Nachmessen der bereits verlegten Länge und der damit erzielten Dispersion mit sich bringen, um die benötigte Zusatzlänge zu bestimmen. Für kurze Entfernungen z.B. innerhalb von Gebäuden wäre dieses Vorgehen weder praktikabel noch wirtschaftlich.

Es ist die Aufgabe der Erfindung, einen Sender zum Erzeugen eines frequenzmodulierten optischen Ausgangssignal anzugeben, der zur Nachrichtenübertragung über einen Lichtwellenleiter beliebiger Länge, höchstens begrenzt durch eine maximal zulässige Länge, verwendbar ist.

Die Aufgabe wird gelöst durch die Merkmale des Anspruchs 1. Vorteilhafte Ausgestaltungen sind den abhängigen Ansprüchen zu entnehmen.

Der erfindungsgemäße Sender weist den Vorteil auf, daß er universell einsetzbar ist und keine Anpassung an die Übertragungsbedingungen erfordert. Er kann besonders vorteilhaft auch bei der optischen Übertragung innerhalb von Gebäuden und als Sender für die sogenannte Inter-Rack-Kommunikation optischer Übertragungseinrichtung wie digitaler Cross-Connetcs oder Add/Drop-Multiplexer eingesetzt werden. Als weiterer Vorteil weist sich, daß der Sender gegenüber herkömmlichen Sendern für Amplitudenmodulation kostengünstiger hergestellt werden kann.

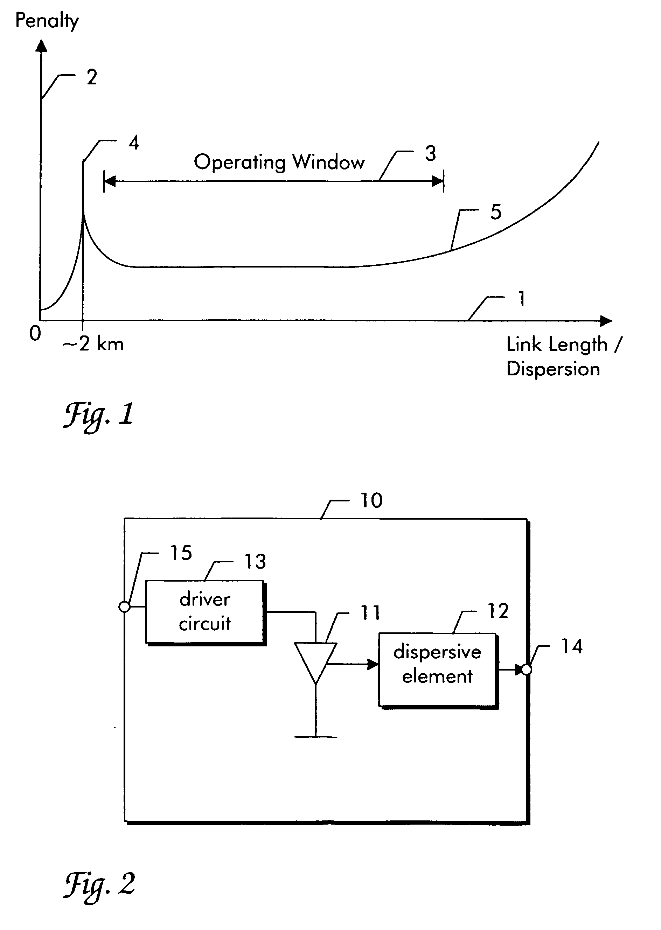

Im folgenden wird die Erfindung anhand der Figuren 1 und 2 in einem Ausführungsbeispiel erläutert. Es zeigt:
- Figur 1:: Ein schematisches Diagramm der Dämpfung des amplitudenmodulierten Anteils bei der Übertragung eines frequenzmodulierten Digitalsignals aufgetragen gegen die Lichtwellenleiterlänge und
- Figur 2:: einen erfindungsgemäßen Sender.

Der Erfindung liegt die Erkenntnis zugrunde, daß ein Mindestmaß an chromatischer Dispersion für die Durchführung des eingangs erläuterten DST-Verfahrens (Dispersion Supported Transmission) erforderlich ist, daß die dafür erforderliche Lichtwellenleiterlänge jedoch gering ist gegenüber der maximal zulässigen Lichtwellenleiterlänge. Desweiteren nutzt die Erfindung die Erkenntnis, daß der Mindestwert für die Dispersion zwar von der Bitrate und der Betriebswellenlänge abhängig ist, für die der Sender ausgelegt ist, nicht jedoch von den äußeren Übertragungsbedingungen wie z.B. dem verwendeten Lichtwellenleitertyp. Ein Grundgedanke der Erfindung besteht deshalb darin, ein optisches Element, welches den Mindestwert für die Dispersion aufweist in den Sender zu integrieren.

Die Dämpfung des amplitudenmodulierten Anteils eines frequenzmodulierten Digitalsignals ist in Figur 1 schematisch gegen die Lichtwellenleiterlänge aufgetragen. Auf der Abszisse 1 ist die Leichtwellenleiterlänge aufgetragen. Diese ist proportional zur gesamten chromatischen Dispersion, die ein durchlaufendes optisches Signal erfährt. Auf der Ordinate 2 ist die Dämpfung des als Amplitudenmodulation meßbaren Signalanteils aufgetragen. In dem Bereich 3 weist die Kurve 5 ein Plateau mit annähernd konstantem Verlauf auf. Dieser Bereich wird als Arbeitsbereich bezeichnet. Die Kurve zeigt einen stark ansteigenden Verlauf bis zu einem Punkt 4, der als "penalty peak" bezeichnet wird. Daran schließt sich ein leicht abfallender Bereich an, der in das Plateau mündet.

An den Arbeitsbereich schließt sich wieder ein ansteigender Abschnitt bei großen Lichtwellenleiterlängen von einigen hundert km an. Der "penalty peak" liegt für eine Standard-Einmodenfaser, eine Bitrate von 40 Gbit und eine Betriebswellenlänge von 1550 nm bei ca. 2 km. Dies entspricht einer Dispersion von 35 ps. Der Mindestwert für die Dispersion ist der Wert, bei dem der Arbeitsbereich beginnt.

Figur 2 zeigt schematisch den erfindungsgemäßen Sender 10. Er enthält eine Laserdiode 11 als Lichtquelle. Die Laserdiode 11 wird von einer Treiberschaltung 13 direkt mit einem am Eingang 15 empfangenen elekrischen Digitalsignal frequenzmoduliert. Das elektrische Digitalsignal hat typisch eine Bitrate von 10 Gbit/s oder 40 Gbit/s. Das von der Laserdiode 11 erzeugte Licht wird auf ein optische Element 12 geleitet, das bei der Betriebswellenlänge der Laserdiode eine fest vorgegebene chromatische Dispersion aufweist. Der Wert für die Dispersion des optischen Elements 12 ist so gewählt, daß das frequenzmodulierte Digitalsignal in ein in detektierbarem Umfang amplitudenmoduliertes Digitalsignal umgewandelt wird und entspricht dem oben angesprochenen Mindestwert. Das von dem optischen Element durchgelassene Lichtsignal wird zu einem optischen Ausgang 14 geleitet, an den eine Glasfaser anschließbar ist.

Für ein Digitalsignal mit einer Bitrate von 10 Gbit/s bei einer Arbeitswellenlänge von 1550 nm liegt der Mindestwert der Dispersion bei 200 ps/nm. Bei einer Bitrate von 40 Gbit/s liegt der Mindestwert bei nur 50 ps. Der Dispersionswert des optischen Elementes muß erfindungsgemäß mindestens so groß sein, daß der sogenannte "penalty peak" überwunden ist. Dieser tritt bei 40 Gbit/s bei etwa 35 ps/nm auf.

Als optisches Element eignet sich ein aufgewickeltes Wellenleiterstück. So kann für 10 Gbit/s ein aufgewickeltes Stück einer Standard-Einmodenfaser mit einer Länge von 13 km verwendet werden. Dies entspricht einer chromatischen Dispersion von insgesamt 200 ps/nm. Bei 40 Gbit/s kann ein aufgewickeltes Stück der Standard-Einmodenfaser mit einer Länge von 3 km verwendet werden.

Alternativ eignet sich als optisches Element ein Bragg-Gitter, das die erforderliche chromatische Dispersion aufweist. Ebenso kann das Element aus einem bei der Betriebswellenlänge zumindest teilweise lichtdurchlässigen Material mit hoher chromatischer Dispersion hergestellt werden. Hierfür kommen Gläser in Frage, die hohe Dispersion bei der Betriebswellenlänge aufweisen.

Der erfindungsgemäße Sender eignet sich zum Einsatz in digitalen optischen Nachrichtennetzen wie SDH-Netzen (Synchrone Digitale Hierarchie), SONET (Synchronous Optical Network) oder WDM-Netzen (Wavelength Division Multiplexing). Von besonderem Vorteil ist, daß der Sender an Lichtwellenleiter mit einer Länge von 0 km bis zu einigen hundert km angeschlossen werden und nach dem DST-Verfahren betrieben werden kann.

Der erfindungsgemäße Sender kann besonders als Sender für die optische Datenübertragung zwischen Teilsystemen einer optischen Übertragungseinrichtung wie einem Cross-Connect eingesetzt werden. Eine solche Übertragungseinrichtung besteht in der Regel aus mehreren Teilsystemen, die in eigenen Racks im selben oder auch in verschiedenen Räumen eines Gebäudes untergebracht sind. Zwischen diesen Teilsystemen findet eine Signalübertragung statt, für die kostengünstige kurzreichweitige Sender benötigt werden. Da der erfindungsgemäße Sender durch das integrierte optische Element für kurzreichweitige optische Signalübertragung über einige hundert Meter geeignet ist, kann er in der geschilderten Inter-Rack-Kommunikation eingesetzt werden. Hinzu kommt, daß frequenzmodulierte Sender einfach aufgebaut sind, kostengünstig realisiert werden können und für höhere Bitraten geeignet sind als amplitudenmodulierte Sender. Mit dem erfindungsgemäßen Sender kann das DST-Verfahren somit auch in der Inter-Rack-Kommunikation eingesetzt werden.

## Patentansprüche

1. Sender zum Erzeugen eines frequenzmodulierten optischen Digitalsignals, der eine frequenzmodulierbare Lichtquelle und einen optischen Ausgang zum Anschluß eines externen Lichtwellenleiters, über den das Digitalsignal übertragbar ist, aufweist,
**dadurch gekennzeichnet, daß**
zwischen Lichtquelle und optischem Ausgang ein optisches Element angeordnet ist, welches bei der Betriebswellenlänge der Lichtquelle eine chromatische Dispersion aufweist, die ausreicht, das frequenzmodulierte Digitalsignal in ein in detektierbarem Umfang amplitudenmoduliertes Digitalsignal umzuwandeln.

2. Sender nach Anspruch 1, bei dem das optische Element ein aufgewickeltes Lichtwellenleiterstück ist.

3. Sender nach Anspruch 2, bei dem das Lichtwellenleiterstück eine Länge von mindestens 2 km hat.

4. Sender nach Anspruch 2, bei dem die Länge des Lichtwellenleiterstückes zwischen 3 km und 30 km liegt.

5. Sender nach Anspruch 1, bei dem das optische Element ein Bragg-Gitter ist.

6. Sender nach Anspruch 1, bei dem das optische Element eine chromatische Dispersion von mindestens 35 ps/nm aufweist.

7. Sender nach Anspruch 6, bei dem die chromatische Dispersion des optischen Elementes zwischen 50 ps/nm und 300 ps/nm liegt.
